# EUROPEAN PATENT SPECIFICATION

(11) **EP 4 067 321 B1**
(45) Date of publication and mention of the grant of the patent: **16.10.2024**
(21) Application number: 22165532.7
(22) Date of filing: 30.03.2022
(51) Int. Cl.: C04B 7/02, C04B 28/02, C04B 28/04

(54) **CEMENT COMPRISING CEMENT CLINKER AND A POZZOLANIC-TYPE SUPPLEMENTARY CEMENTITIOUS MATERIAL**
ZEMENT UMFASSEND ZEMENTKLINKER UND EIN ZUSÄTZLICHES ZEMENTÄRES POZZOLANISCHES MATERIAL
CIMENT COMPRENANT DU CLINKER DE CIMENT ET UN MATERIAU CIMENTAIRE COMPLEMENTAIRE DE TYPE POZZOLANIQUE

(30) Priority: 01.04.2021 IT 202100008132
(43) Date of publication of application: 05.10.2022
(73) Proprietor: Buzzi S.P.A., 15033 Casale Monferrato (AL) (IT)
(72) Inventor: CANONICO, Fulvio, 10143 Torino (IT); BERTOLA, Federica, 28100 Novara (IT); MUTKE, Sabine, 65203 WIESBADEN (DE); IRICO, Sara, 13039 Trino (VC) (IT); GASTALDI, Daniela, 15033 CASALE MONFERRATO (AL) (IT)
(74) Representative: Torredimare, Luca

(56) References cited:
- US-A- 5 788 762
- FAURE ANTOINE ET AL: "Ability of Two Dam Fine-Grained Sediments to be Used in Cement Industry as Raw Material for Clinker Production and as Pozzolanic Additional Constituent of Portland-Composite Cement", WASTE AND BIOMASS VALORIZATION, SPRINGER NETHERLANDS, NL, vol. 8, no. 6, 9 March 2017 (2017-03-09), pages 2141 - 2163, XP036330720, ISSN: 1877-2641, [retrieved on 20170309], DOI: 10.1007/S12649-017-9870-8

## Description

### Field of the invention

The present invention relates to a cement comprising cement clinker and a supplementary cementitious material comprising pozzolanic materials.

The cement according to the present invention has very good compressive strength properties, although it has a reduced clinker content.

### Background of the invention

As is known, hydraulic cement is a construction material belonging to the class of hydraulic binders. Cement is obtained by grinding cement clinker (hereafter referred to as clinker), generally in the presence of calcium sulphate and, optionally, one or more supplementary cementitious materials (SCMs).

Clinker is produced by reacting limestone with aluminous and ferrous raw materials at 1,450-1,500 °C in a rotary furnace. This process has a considerable environmental impact, particularly because of the emissions of carbon dioxide (CO₂) resulting from the high temperatures of the heat treatment and those generated during the chemical decomposition of the limestone (decarbonization).

In order to limit the environmental impact of the clinker production process, the cement industry has endeavoured to develop new production technologies and new types of materials making it possible to reduce the amount of clinker in cements while still obtaining the same performance levels as those offered by cements with higher clinker content.

To this end, it is currently known in the state of art to use "supplementary cementitious materials" (hereafter also referred to as "SCMs") as a partial replacement for clinker. The most commonly used SCMs include: granulated blast furnace slag, flying ashes from coal-fired power plants, silica fume, and natural pozzolanic materials (natural pozzolans).

As blast furnace slag and flying ashes may concern, their use as SCMs has become increasingly difficult because of the gradual reduction in the number of coal-fired power plants and active blast furnaces, particularly in Europe, resulting in such materials being now less easily available.

Natural pozzolans are commonly employed as a replacement material for clinker in cement production. The UNI EN 197-1:2000 standard, for example, includes pozzolanic cements, i.e. cements containing natural pozzolans, among the most used cement types.

According to the above-mentioned EN 197-1 standard, pozzolanic materials are silicon and/or silicon/aluminium-based natural substances that do not harden when mixed with water, instead, when finely ground they react, in the presence of water, with dissolved calcium hydroxide (Ca(OH)₂) at room temperature to form calcium silicates and calcium aluminates having hardening properties (*pozzolanic activity*)*.* Natural pozzolans essentially consist of reactive silica (SiO₂) and aluminium oxide (Al₂O₃), with the remaining part consisting of iron oxides (Fe₂O₃) and other oxides. Reactive silica is present in pozzolans in a quantity of at least 25% by mass.

According to the EN 197-1 specification, pozzolanic materials can be classified into: natural pozzolans (P) and calcined natural pozzolans (Q), i.e. natural pozzolans activated by heat treatment.

P-type pozzolans generally consist of materials of volcanic origin or sedimentary rocks having a chemical and mineralogical composition that lends pozzolanic activity to the material.

Q-type pozzolans generally consist of materials of volcanic origin, clays, schists or sedimentary rocks having pozzolanic activity following heat treatment. In particular, Q-type pozzolans include calcined clays, also called artificial pozzolans.

P-type natural pozzolans have the drawback that they are available in limited amounts, since they can only be found in certain geographical regions. Moreover, P-type natural pozzolans are generally of little economical interest in the cement industry, in that their pozzolanic activity varies considerably depending on the origin, and hence the chemical composition, of the individual pozzolanic materials. In particular, natural pozzolans may include significant amounts of mineralogical phases having low pozzolanic activity, so that, their use as SCMs cannot always ensure the achievement of mechanical performance suited to the required characteristics of the cements to be produced.

Q-type pozzolans, particularly calcined clays, are a promising supplementary cementitious material that can be used as a partial replacement for clinker for cement production. Patent EP 2429966 A1 describes, for example, a cement containing an SCM comprising calcined clay combined with a carbonatic material. The cement described in EP 2429966 A1 has higher compressive strength than expected from the binary combinations "Portland cement + carbonatic material" and "Portland cement + calcined clay".

US 5788762 describes pozzolanic and cementitious compounds that can be used to prepare conglomerates having improved mechanical properties, reduced water demand and lower alkali functionality.

### Summary of the invention

In view of the above-described state of the art, the Applicant set the primary goal of providing a cement comprising a supplementary cementitious material, wherein the pozzolanic activity of said supplementary cementitious material is such that it can be effectively employed as a partial replacement for clinker in cement production, while lending satisfactory mechanical performance to the cement.

In particular, it is a specific object of the present invention to provide a cement comprising a supplementary cementitious material, wherein said cement has physical-mechanical properties (e.g. compressive strength) comparable with those of a corresponding cement comprising clinker only.

The Applicant found out that this object, and other objects as well, which will be further clarified hereinafter, can be achieved by using, in a cement formulation, a supplementary cementitious material comprising a combination of at least one calcined clay and at least one natural pozzolan with a given carbonate species content.

It was observed, in fact, that a natural pozzolan having a carbonate species content equal to or greater than approximately 3% by weight, when used in combination with a calcined clay, results in the formulation of a cement having mechanical strength properties that are similar to those of corresponding cements containing clinker only.

This result is especially surprising if we consider that natural pozzolans containing relatively high amounts of carbonate species exhibit poor pozzolanic activity when used alone as a single SCM, or anyway in substantial absence of calcined clay, for cement production. In particular, such natural pozzolans with a high carbonate species content exhibit less pozzolanic activity than natural pozzolans containing carbonate species in amounts smaller than 3% by weight, and are therefore considered to be less suited than the latter for use as SCMs.

Therefore, the study at the basis of the present invention has made it possible to exploit natural resources, such as natural pozzolans having a relatively high carbonate species content, which were so far deemed to be of little practical interest, as effective supplementary cementitious materials for cement production.

Since it reduces the consumption of clinker for cement production, the use of such supplementary cementitious material also results in reduced CO₂ emissions and lower energy consumption in cement production processes.

According to a first aspect, the present invention relates to a cement comprising cement clinker and a supplementary cementitious material, wherein said supplementary cementitious material comprises:
a.at least one calcined clay;
b.at least one natural pozzolan containing carbonate species in a quantity, expressed as CaCO₃, of not less than 3% by weight of the weight of said natural pozzolan.

According to a second aspect, the present invention relates to a cementitious conglomerate, such as mortar or concrete, comprising said cement and stone aggregates.

According to a third aspect, the present invention relates to a method of producing a cement, comprising the steps of:
- providing at least one calcined clay;
- mixing said calcined clay with cement clinker and at least one natural pozzolan with a carbonate species content, expressed as CaCO₃, of not less than 3% by weight of the total weight of said natural pozzolan;
- grinding said mixture in order to obtain said cement.

According to a fourth aspect, the present invention relates to the use of a supplementary cementitious material comprising at least one calcined clay and at least one natural pozzolan with a carbonate species content, expressed as CaCO₃, of not less than 3% by weight of the weight of said natural pozzolan, for reducing CO₂ emissions during the production of a cement comprising cement clinker.

### Detailed description of the invention

The natural pozzolan that can be used for the purposes of the present invention is a P-type natural pozzolan, as defined in the EN 197-1 standard, having a carbonate species content (expressed as CaCO₃) equal to or greater than 3% by weight of the total weight of the natural pozzolan.

Preferably, the carbonate species content (expressed as CaCO₃) is equal to or greater than 4% by weight, more preferably equal to or greater than 5% by weight, even more preferably equal to or greater than 6% by weight, of the total weight of the natural pozzolan.

Preferably, the carbonate species content (expressed as CaCO₃) is equal to or lower than 40% by weight, more preferably equal to or lower than 30% by weight, even more preferably equal to or lower than 25% by weight, of the total weight of the natural pozzolan.

In a preferred embodiment, the carbonate species content (expressed as CaCO₃) in the natural pozzolan lies in the range of 3% to 40% by weight, preferably in the range of 5% to 30% by weight, of the total weight of the natural pozzolan.

In the natural pozzolan, carbonate species may be present, for example, as calcium carbonate or magnesium carbonate.

Some examples of natural pozzolans that can be used for the purposes of the present invention are:
- Latium pozzolan, e.g. having the following composition: CaO 11%, SiO₂ 44%, Al₂O₃ 15%, Fe₂O₃ 10%, MgO 3.5%, K₂O 4%, Na₂O 2%, other constituents ca. 10%, weight loss due to calcination (cwl) 7.8%, reactive silica value 50%;
- Greek pozzolan, e.g. having the following composition: SiO₂ 74%, Al₂O₃ 11%, Fe₂O₃ 1%, CaO 1%, K₂O 4%, Na₂O 3%, reactive silica value 35%;
- Osiola pozzolan, e.g. having the following composition: CaO 18.5%, SiO₂ 43%, Al₂O₃ 9%, Fe₂O₃ 4%, MgO 3.5%, K₂O 2%, cwl 17.8%, reactive silica value 50%.

Hereinafter, natural pozzolans containing carbonate species in the above-defined amounts will be referred to, for brevity, as "natural pozzolans with high carbonate species concentration".

Natural pozzolans with high carbonate species concentration are used in the form of finely ground powder. Preferably, the powder has a specific surface area in the range of 800 - 10,000 cm²/g (determined using the Blaine method described in EN 196-6:1989).

Preferably, the natural pozzolan with high carbonate species concentration is present in the cement in a quantity lying in the range of 1% to 35% by weight, more preferably 10% to 30% by weight, of the weight of the cement.

The calcined clay that can be used for the purposes of the present invention is obtained by subjecting a clayey material to heat treatment. The heat treatment causes deoxydrilation of the clayey material, i.e. elimination, as water, of at least part of the oxydril groups (OH) that are present in the starting clayey material.

The term "clayey material" refers to a solid material comprising one or more clayey minerals, such as minerals belonging to the kaolin group, the smectite group, or the vermiculite group.

Preferably, the clayey material is selected among those of the kaolin group, more preferably among: kaolinite, dickite, nacrite, halloysite.

Preferably, the heat treatment (calcination) is conducted at a temperature in the range of 650°C to 1,100°C for a total time of 3 seconds to 45 minutes depending on the technology used for the calcination process, e.g.: flash calcination (3 - 30 sec), rotary furnace (20 - 45 min), fluid bed calcination (30 sec - 5 min), electric furnace (15 min - 4 h).

Preferably, the calcined clay has a residual content of oxydril groups of 30% (mol/mol) of the oxydril group content of the clayey material prior to calcination. The eliminated and residual oxydril group content can be determined by Thermogravimetry (TG) or Differential Thermal Analysis (DTA).

Preferably, the calcined clay is present in the cement in a quantity lying in the range of 1% to 45% by weight, more preferably 10% to 40% by weight, of the weight of the cement.

The SCM used for preparing the cement preferably comprises calcined clay and natural pozzolan with high carbonate species concentration in a clay/pozzolan mass ratio lying in the range of 10:1 to 1:5.

Preferably, the SCM is present in the cement in a quantity lying in the range of 5% to 75% by weight, more preferably 10% to 50% by weight, of the weight of the cement.

The SCM may also comprise other materials having hydraulic activity, in particular pozzolanic activity or latent hydraulic activity. In one embodiment, the SCM comprises blast furnace slag, flying ashes, or a combination thereof. When present, such further materials having hydraulic activity are contained in the SCM in a quantity equal to or smaller than 90% by weight of the weight of the SCM.

For the purposes of the present invention, the term "flying ashes" refers to the material defined in the EN 197-1 standard, i.e. the material resulting from mechanical or electrostatic precipitation of the powder particles that are present in the gaseous effluents generated by coal combustion. Flying ashes may be either siliceous or calcareous, respectively identified as V-type and W-type flying ashes in the EN 197-1 specification. For the purposes of the present description and the appended claims, the natural pozzolan according to the present invention includes no flying ashes.

In general, the cement clinker that can be used for the purposes of the present invention may be any cement clinker. The cement clinker may comprise belitic clinker, sulphoaluminate clinker (SAC), and mixtures thereof. In one embodiment, the cement clinker comprises, or consists of, Portland cement clinker.

Preferably, the cement clinker has a C₃S content in excess of 50% by mass, more preferably in excess of 70% by mass.

Preferably, the cement clinker has an aluminium content, expressed as Al₂O₃, of less than 10% by mass, more preferably less than 8% by mass.

The cement clinker is used in powder form, preferably having a surface area in the range of 2,500 - 10,000 cm²/g (determined using the Blaine method described in EN 196-6:1989).

Preferably, the clinker is present in the cement in a quantity lying in the range of 30% to 75% by weight of the weight of the cement.

The cement according to the present invention may comprise calcium sulphate (gypsum, anhydrite, hemihydrate), preferably in a quantity lying in the range of 2% to 10% by weight of the weight of the cement. Calcium sulphate can be used to advantage in order to regulate the various properties of the cement (e.g. compressive strength, shrinkage, development of hydration heat, durability, etc.), in particular to regulate its setting activity.

The cement may further include limestone, preferably in a quantity lying in the range of 1% to 15% by weight of the weight of the cement. The cement may further include one or more of blast furnace slag, flying ashes, calcined schist, preferably in a total quantity lying in the range of 5% to 50% by weight of the weight of the cement. The cement may further include silica fume, preferably in a quantity equal to or smaller than 10% by weight of the weight of the cement.

Optionally, the cement may further include additives commonly employed for clinker cement production, such as grinding adjuvants, additives for increasing the initial and/or final strength (e.g. triethanolamine-based (TEA) compounds), fluidifying agents, setting delaying and accelerating agents. Generally, such additives are present in a total amount equal to or smaller than 1% by weight of the weight of the cement.

After hardening, the cement according to the present invention preferably has a compressive strength after 7 days of at least 15 MPa and/or a compressive strength after 28 days of at least 32.5 MPa, measured in accordance with EN 196-1:1995.

The cement according to the present invention can be classified as a pozzolanic cement in compliance with the UNI EN 197-1 specification.

The cement according to the present invention can be used for preparing cementitious conglomerates, such as mortar and concrete, in accordance with the techniques known to those skilled in the art.

In particular, cementitious conglomerates such as mortar and concrete can be prepared by combining the cement with at least water and aggregates. Aggregates include siliceous, calcareous and siliceous-calcareous materials, such as, for example, sand and gravel. Aggregates may be natural or artificial materials, waste materials or scraps, or recycled materials.

The cement and the cementitious conglomerates according to the present invention can be prepared by using techniques and equipment known to those skilled in the art.

The following implementation examples are provided merely in order to illustrate the present invention, and should not be deemed to limit the protection scope defined by the appended claims.

### EXAMPLES

Cements were prepared which had the compositions shown in Tables 1 and 2.

Portland cement clinker having the following mineralogical composition was used:

| | |
|---|---|
| C₃S | 64.52 |
| C₂S | 12.89 |
| C₄AF | 13.26 |
| C₃A | 4.26 |
| Periclase | 0.79 |
| Free lime | 1.00 |
| Aphthitalite | 0.81 |
| Arcanite | 1.21 |
| Langbeinite | 1.26 |

The starting clay, consisting of kaolinite mineral in a quantity of at least 85%, was calcined at 700°C for 30 min.

Two cement samples were prepared in accordance with the present invention (identified as QP4 and QPL2), containing clinker combined with an SCM consisting of a mixture of calcined clay and natural pozzolan with a carbonate species content (expressed as CaCO₃) of 6% by weight of the pozzolan.

For comparative purposes, cements were prepared which contained one of the following SCMs i - iii:
(i) calcined clay combined with a natural pozzolan containing substantially no carbonate species (QP5 and QP2);
(ii) only natural pozzolan containing substantially no carbonate species (P and LP0);
(iii) only natural pozzolan with a carbonate species content (expressed as CaCO₃) of 6% by weight of the weight of the pozzolan (O5 and O6).

For each cement, compressive strength was assessed after 7 and 28 days. The test results are shown in Tables 1 and 2.

**Table 1 (weight percentages referred to the total weight of the cement)**

| | Sample | | | |
|---|---|---|---|---|
| | QP4 | QP5 | O5 | P |
| Clinker (%) | 68 | 68 | 68 | 68 |
| Limestone (%) | 5 | 5 | 5 | 5 |
| Anhydrite (%) | 5 | 5 | 5 | 5 |
| Calcined clay (%) | 11 | 11 | - | - |
| Natural pozzolan O (CaCO₃ = 6 %) (%) | 11 | - | 22 | - |
| Natural pozzolan L (no CaCO₃) (%) | - | 11 | - | 22 |
| Compressive strength after 7 days (MPa) | 45 | 38 | 29 | 39 |
| Compressive strength after 28 days (MPa) | 43 | 45 | 40 | 49 |

**Table 2 (weight percentages referred to the total weight of the cement)**

| | Sample | | | |
|---|---|---|---|---|
| | QPL2 | QP2 | O6 | LP0 |
| Clinker (%) | 50 | 50 | 50 | 50 |
| Limestone (%) | 5 | 5 | 5 | 5 |
| Gypsum (%) | 5 | 5 | 5 | 5 |
| Calcined clay (%) | 20 | 20 | - | - |
| Natural pozzolan O (CaCO₃ = 6 %) (%) | 20 | - | 40 | - |
| Natural pozzolan L (no CaCO₃) (%) | - | 20 | - | 40 |
| Compressive strength after 7 days (Mpa) | 35.5 | 35 | 29 | 24 |
| Compressive strength after 28 days (Mpa) | 50 | 44.2 | 33 | 39 |

The results listed in Tables 1 and 2 highlight the fact that the cements prepared using an SCM comprising calcined clay combined with a pozzolanic material (samples QP4, QP5, QPL2 and QP2) have higher compressive strength than the cements prepared using, as SCM, only one of the two pozzolanic materials (samples O5, P, O6 and LP0) .

However, higher values of compressive strength after 7 and 28 days can be observed for those cements according to the invention (samples QP4 and QPL2) in which calcined clay was used in combination with the pozzolan with high carbonate species content (6% w/w of CaCO₃). This result is surprising, in that the values of compressive strength after 7 and 28 days measured for the comparative cements containing pozzolans only (in the absence of calcined clay) indicate that the pozzolan with no carbonate species (samples P and LP0) has greater pozzolanic activity than the pozzolan containing carbonate species (samples O5 and O6).

## Claims

1. Cement comprising cement clinker and a supplementary cementitious material, wherein said supplementary cementitious material comprises:
a. at least one calcined clay;
b. at least one natural pozzolan with a carbonate species content, expressed as CaCO₃, of not less than 3% by weight of the total weight of said natural pozzolan.

2. Cement according to claim 1, wherein said natural pozzolan has a carbonate species content, expressed as CaCO₃, equal to or greater than 4% by weight, preferably equal to or greater than 5%, of the weight of the natural pozzolan.

3. Cement according to claim 1 or 2, wherein said natural pozzolan has a carbonate species content, expressed as CaCO₃, equal to or smaller than 40% by weight, preferably equal to or smaller than 30% by weight, of the weight of the natural pozzolan.

4. Cement according to any one of the preceding claims, wherein said natural pozzolan is present in the cement in a quantity lying in the range of 1% to 35% by weight, preferably 10% to 30% by weight, of the weight of the cement.

5. Cement according to any one of the preceding claims, wherein said calcined clay is present in the cement in a quantity lying in the range of 1% to 45% by weight, more preferably 10% to 40% by weight, of the weight of the cement.

6. Cement according to any one of the preceding claims, wherein said supplementary cementitious material is present in a quantity lying in the range of 5% to 75% by weight, preferably 10% to 50% by weight, of the weight of the cement.

7. Cement according to any one of the preceding claims, wherein the mass ratio between said calcined clay and said natural pozzolan lies in the range of 10:1 to 1:5.

8. Cement according to any one of the preceding claims, wherein said clinker comprises belitic clinker, SAC clinker, Portland cement clinker, or mixtures thereof.

9. Cement according to any one of the preceding claims, comprising blast furnace slag, flying ashes, calcium sulphates, or mixtures thereof.

10. Cementitious conglomerate, such as mortar or concrete, comprising a cement according to any one of claims 1 to 9 and stone aggregates.

11. Method of producing a cement, comprising the steps of:
- providing at least one calcined clay;
- mixing said calcined clay with cement clinker and at least one natural pozzolan with a carbonate species content, expressed as CaCO₃, of not less than 3% by weight of the total weight of said natural pozzolan;
- grinding said mixture in order to obtain said cement.

12. Use of a supplementary cementitious material comprising at least one calcined clay and at least one natural pozzolan with a carbonate species content, expressed as CaCO₃, of not less than 3% by weight of the weight of said natural pozzolan, for reducing CO₂ emissions during the production of a cement comprising cement clinker.

## Patentansprüche

1. Zement, der Zementklinker und ein zusätzliches zementhaltiges Material umfasst, wobei das zusätzliche zementhaltige Material umfasst:
b. mindestens ein natürliches Puzzolan mit einem
a. mindestens einen kalzinierten Ton;
Gehalt an Karbonatarten, ausgedrückt als CaCO₃, von mindestens 3 Gew.-% des Gesamtgewichts des natürlichen Puzzolans.

2. Zement nach Anspruch 1, wobei das natürliche Puzzolan einen Gehalt an Karbonatarten, ausgedrückt als CaCO₃, von 4 Gew.-% oder mehr, vorzugsweise von 5 Gew.-% oder mehr, bezogen auf das Gewicht des natürlichen Puzzolans, aufweist.

3. Zement nach Anspruch 1 oder 2, wobei das natürliche Puzzolan einen Gehalt an Karbonatarten, ausgedrückt als CaCO₃, aufweist, der gleich oder kleiner als 40 Gew.-%, vorzugsweise gleich oder kleiner als 30 Gew.-%, des Gewichts des natürlichen Puzzolans ist.

4. Zement nach einem der vorhergehenden Ansprüche, wobei das natürliche Puzzolan in dem Zement in einer Menge im Bereich von 1 bis 35 Gew.-%, vorzugsweise 10 bis 30 Gew.-%, des Gewichts des Zements vorhanden ist.

5. Zement nach einem der vorhergehenden Ansprüche, wobei der kalzinierte Ton in dem Zement in einer Menge im Bereich von 1 bis 45 Gew.-%, vorzugsweise 10 bis 40 Gew.-%, des Zementgewichts vorhanden ist.

6. Zement nach einem der vorhergehenden Ansprüche,
wobei das zusätzliche zementhaltige Material in einer Menge von 5 bis 75 Gew.-%, vorzugsweise 10 bis 50 Gew.-%, des Gewichts des Zements vorhanden ist.

7. Zement nach einem der vorhergehenden Ansprüche, wobei das Massenverhältnis zwischen dem kalzinierten Ton und dem natürlichen Puzzolan im Bereich von 10:1 bis 1:5 liegt.

8. Zement nach einem der vorhergehenden Ansprüche, wobei der Klinker belitischen Klinker, SAC-Klinker, Portlandzementklinker oder Mischungen davon umfasst.

9. Zement nach einem der vorhergehenden Ansprüche, enthaltend Hüttensand, Flugasche, Calciumsulfate oder Mischungen davon.

10. Zementkonglomerat, wie Mörtel oder Beton, das einen Zement nach einem der Ansprüche 1 bis 9 und Gesteinskörnungen enthält.

11. Verfahren zur Herstellung eines Zements, das die folgenden Schritte umfasst:
- Bereitstellung von mindestens einem kalzinierten Ton;
- Mischen des kalzinierten Tons mit Zementklinker und mindestens einem natürlichen Puzzolan mit einem Gehalt an Karbonatarten, ausgedrückt als CaCO₃, von mindestens 3 Gew.-% des Gesamtgewichts des natürlichen Puzzolans;
- Mahlen der Mischung, um den Zement zu erhalten.

12. Verwendung eines ergänzenden zementartigen Materials, das mindestens einen kalzinierten Ton und mindestens ein natürliches Puzzolan mit einem Gehalt an Karbonatarten, ausgedrückt als CaCO₃, von mindestens 3 Gew.-% des natürlichen Puzzolans, zur Verringerung der CO₂ Emissionen bei der Herstellung eines Zements, der Zementklinker enthält.

## Revendications

1. Ciment comprenant du clinker de ciment et un matériau cimentaire supplémentaire, dans lequel ledit matériau cimentaire supplémentaire comprend :
a. au moins une argile calcinée ;
b. au moins une pouzzolane naturelle présentant une teneur en espèces carbonatées, exprimées par CaCO₃, d'au moins 3 % en poids du poids total de ladite pouzzolane naturelle.

2. Ciment selon la revendication 1, dans lequel ladite pouzzolane naturelle présente une teneur en espèces carbonatées, exprimées par CaCO₃, égale ou supérieure à 4 % en poids, de préférence égale ou supérieure à 5 %, du poids de la pouzzolane naturelle.

3. Ciment selon la revendication 1 ou 2, dans lequel ladite pouzzolane naturelle présente une teneur en espèces carbonatées, exprimées par CaCO₃, égale ou inférieure à 40 % en poids, de préférence égale ou inférieure à 30 % en poids, du poids de la pouzzolane naturelle.

4. Ciment selon l'une quelconque des revendications précédentes, dans lequel ladite pouzzolane naturelle est présente dans le ciment en une quantité comprise entre 1 % et 35 % en poids, de préférence entre 10 % et 30 % en poids, du poids du ciment.

5. Ciment selon l'une quelconque des revendications précédentes, dans lequel ladite argile calcinée est présente dans le ciment en une quantité comprise dans la plage de 1 % à 45 % en poids, de manière plus préférée de 10 % à 40 % en poids, du poids du ciment.

6. Ciment selon l'une quelconque des revendications précédentes, dans lequel ledit matériau cimentaire supplémentaire est présent en une quantité comprise dans la plage de 5 % à 75 % en poids, de préférence de 10 % à 50 % en poids, du poids du ciment.

7. Ciment selon l'une quelconque des revendications précédentes, dans lequel le rapport massique entre ladite argile calcinée et ladite pouzzolane naturelle est compris dans la plage allant de 10:1 à 1:5.

8. Ciment selon l'une quelconque des revendications précédentes, dans lequel ledit clinker comprend du clinker bélitique, du clinker SAC, du clinker de ciment Portland ou des mélanges de ceux-ci.

9. Ciment selon l'une quelconque des revendications précédentes, comprenant du laitier de haut fourneau, des cendres volantes, des sulfates de calcium ou des mélanges de ceux-ci.

10. Conglomérat cimentaire, tel que du mortier ou du béton, comprenant un ciment selon l'une quelconque des revendications 1 à 9 et des agrégats de pierre.

11. Procédé de production d'un ciment, comprenant les étapes consistant à :
- prévoir au moins une argile calcinée ;
- mélanger ladite argile calcinée avec du clinker de ciment et au moins une pouzzolane naturelle avec une teneur en espèces carbonatées, exprimées par CaCO₃, d'au moins 3 % en poids du poids total de ladite pouzzolane naturelle ;
- broyer ledit mélange pour obtenir ledit ciment.

12. Utilisation d'un matériau cimentaire supplémentaire comprenant au moins une argile calcinée et au moins une pouzzolane naturelle avec une teneur en espèces carbonatées, exprimée par CaCO₃, d'au moins 3 % en poids du poids de ladite pouzzolane naturelle, pour réduire les émissions de CO₂ lors de la production d'un ciment comprenant du clinker de ciment.
